(19) Europäisches Patentamt

European Patent Office

Office européen des brevets

(11) Veröffentlichungsnummer: **0 220 560 B1**

(12) **EUROPÄISCHE PATENTSCHRIFT**

(45) Veröffentlichungstag der Patentschrift: **23.12.92**

(21) Anmeldenummer: **86113952.5**

(22) Anmeldetag: **08.10.86**

(51) Int. Cl.⁵: **B60P 1/48**, B66C 1/12, B66C 1/66

(54) **Ladeeinrichtung, insbesondere für Lastkraftwagen, mit zwei vornehmlich hydraulisch betätigten Schwenkarmen.**

(30) Priorität: **11.10.85 DE 8528956 U**
            **11.10.85 DE 8528955 U**

(43) Veröffentlichungstag der Anmeldung:
    **06.05.87 Patentblatt 87/19**

(45) Bekanntmachung des Hinweises auf die
    Patenterteilung:
    **23.12.92 Patentblatt 92/52**

(84) Benannte Vertragsstaaten:
    **AT BE CH DE FR GB IT LI LU NL SE**

(56) Entgegenhaltungen:
    **AT-B- 341 348          CH-A- 339 720**
    **DE-A- 2 322 657        DE-A- 2 421 074**
    **FR-A- 2 154 382        GB-A- 1 255 630**
    **US-A- 2 099 116**

(73) Patentinhaber: **Wilcke, Hans**
    **Gotenstrasse 9**
    **W-5484 Bad Breisig(DE)**

(72) Erfinder: **Wilcke, Hans**
    **Gotenstrasse 9**
    **W-5484 Bad Breisig(DE)**

## Beschreibung

Die Erfindung betrifft eine Ladeeinrichtung, insbesondere für Lastkraftwagen, nach dem Oberbegriff von Anspruch 1.

Es sind mit dem Fahrzeug fest verbundene Ladeeinrichtungen mit zwei Schwenkarmen bekannt, wie sie z.B. als Absetzkipper verwendet werden. Nachteilig ist, daß wegen der Anbringung der Schwenkarme und der sie betätigenden Hydraulikzylinder innerhalb des zulässigen Fahrzeug-Breitenprofils auf der Ladefläche die verfügbare Breite der Ladefläche und die wegen des Durchschwingens der Last zwischen den Schwenkarmen verfügbare größte Breite der Ladung erheblich geringer ist als bei Lastkraftwagen mit herkömmlicher Gestaltung der Ladefläche. Von Nachteil ist weiter, daß zur Übertragung der beim Be- und Entladen auftretenden Kräfte von den Schwenkarmen auf das Fahrgestell aufwendige Stahlkonstruktionen von erheblichem Gewicht erforderlich sind, die die nutzbringende Tragkraft des Lastwagens einschränken.

Es ist weiter ein Fahrzeug für den Transport von Stahlbetonraumzellen bekannt (DE 23 22 657) das außerhalb der Breitenausdehnung der Raumzellen hydraulisch betätigbare Schwenkarme zum Be- und Entladen besitzt, die in Transportstellung hinter der Ladefläche in das Breitenprofil der Raumzelle eingezogen werden. Diese Erfindung ist nur realisierbar an Spezialfahrzeugen, die wegen der Überbreite ihrer Ladung (Raumzellen) von der Einhaltung der normal zulässigen Fahrzeugbreite befreit sind, weil die hydraulische Betätigung der Schwenkarme außerhalb der die volle zulässige Fahrzeugbreite in Anspruchnehmende Radachsenbreite liegt. Diese Erfindung ist daher für die Verwendung im allgemeinen Güterverkehr mit Serienfahrzeugen nicht anwendbar.

Weiter sind Ladeeinrichtungen für Lastkraftwagen in Form von Ladekränen bekannt. Bei ihnen ist von Nachteil, daß ihre Tragfähigkeit erheblich geringer ist als die Tragfähigkeit des Lastkraftwagens und zur vollständigen Beladung eines Lkw eine zeitaufwendige Vielzahl von Arbeitsgängen erforderlich ist. Weiter nachteilig ist, daß Ladekräne entweder die verfügbare Länge der Ladefläche vermindern oder die Gesamtlänge des Fahrzeugs sich besonders beim Einbau am Fahrzeugende vergrößert.

Nachteilig ist ferner, daß bei den gegenwärtig üblichen Umschlagvorgängen das pallettierte Gut mit Hilfe von zusätzlich notwendigen Umschlaggeräten ( Gabelstaplern, Kränen) verladen werden muß. Die Ladevorgänge erfordern zusätzliches Personal und aufwendiges Gerät. Schwierigkeiten in der Koordination der Bereitstellung der Beladmittel und des Transportmittels führen zu kostenträchtigem Leerlauf.

In größerem Umfang stehen Lkw mit eigenen Be- und Entladeeinrichtungen großer Tragkraft zur Verfügung, z.B. Absetzkipper. Sie können für den Transport von Palletten nicht genutzt werden, weil es an einem geeigneten Hebegeschirr fehlt, das der Tragkraft der im Absetzkipper eingebauten Hebeeinrichtung entspricht.

Zudem ist bisher kein Hebegeschirr bekannt, das es erlaubt, Palletten in größerer Zahl mit auf Kraftfahrzeugen installierten Hebegeräten oder mit Kränen aus einen Pallettenlager zu entnehmen , wenn nicht alle zum Anschlagen des Geschirrs erforderlichen Seiten zugänglich sind.

Zur Sicherung pallettierter Güter und anderer Ladungen ähnlicher Dimensionen beim Transport ist es gegenwärtig erforderlich, besondere Vorrichtungen bereitzuhalten, die arbeitsaufwendig nach Beendigung der Beladung angebracht werden müssen.

Dieser Erfindung liegt die Aufgabe zugrunde, eine Be- und Entladeeinrichtung für Lkw mittels zweier Schwenkarme vorzustellen, die es erlaubt, Ladungen bis zur größten Tragfähigkeit des Lkw und bis zur größten Ausdehnung seiner Ladefläche in einem Arbeitsgang auf- und abzuladen oder mit Hilfe dieser Ladeeinrichtung auch Anhänger oder Lkw ohne Ladeeinrichtung zu beladen oder zu entladen.

Weitere Aufgabe der Erfindung ist es, die Ladeeinrichtung so zu gestalten, daß sie während der Benutzung des Lkw als Transportmittel weder die serienmäßig übliche Ladefläche einschränkt noch über die zulässige oder gewünschte Fahrzeugbreite hinausragt und die Fahrzeuglänge nicht oder nur unwesentlich vergrößert. Weitere Aufgabe der Erfindung ist es, eine Ladeeinrichtung vorzustellen, die sich automatisch während des Lade- oder Entladevorganges gegen den Boden abstützen kann und die auftretenden Kräfte zumindest teilweise ohne Nutzung des Fahrzeugrahmens direkt auf den Erdboden überträgt, dadurch das Gewicht der Stahlkonstruktion und damit das Eigengewicht des Fahrzeugs vermindert und die verfügbare Nutzlast erhöht. Weitere Aufgabe der Erfindung bei Benutzung von hydraulischen Drehkolbenzylindern zur Krafterzeugung ist es, zusätzlich Eigengewicht und Raumbedarf der Anlage zu vermindern. Schließlich ist es Aufgabe der Erfindung, die Dimensionen der auf die Schwenkarme wirkenden hydraulischen Stelleinrichtungen dadurch gering zu halten, daß entweder durch eine automatische Verstellung des Kraftangriffspunktes der Stelleinrichtungen an die Schwenkarme ein jeweils größtmöglicher Hebelarm für den Kraftangriff eingestellt wird oder das Gewicht des Lkw teilweise als Kraftspeicher genutzt wird.

Weitere Aufgabe dieser Erfindung ist es, ein Hebegeschirr aufzuzeigen, welches erlaubt, mehrere Palletten bis hin zu einer ganzen Lkw-Ladung in einem Arbeitsgang aufzuladen, gleichgültig, ob das Hebemittel Teil des Fahrzeugs ist oder nicht. Zusätzlich soll das Hebegeschirr gemäß dieser Erfindung die Nutzung von Absetzkippern für die Selbst- und Fremdbeladung mit einer größeren Anzahl von Palletten oder anderen Lasten ähnlicher Art in einen Arbeitsgang ermöglichen.

Weitere Aufgabe dieser Erfindung ist es, das Hebegeschirr unterschiedlichen Abmessungen der Gesamtlast, wie sie sich aus unterschiedlichen Pallettenabmessungen oder unterschiedlichen Anordnungen der Palletten ergeben, anpassbar zu gestalten.

Darüber hinaus ist es Aufgabe der Erfindung, das Hebegeschirr so zu gestalten, daß mit seiner Hilfe die Lkw-Beladung mit Palletten ohne Fremdhilfe möglich ist, auch wenn die Palletten aus einem großflächigen Lager entnommen werden sollen, und daher nicht alle zum Anschlagen des Geschirrs erforderlichen Seiten der Palletten zugänglich sind.

Weitere Aufgabe der Erfindung ist es, daß das Hebegeschirr als Ganzes oder in Teilen und gegebenenfalls mit zusätzlichen Vorrichtungen die Sicherung des Ladegutes beim Transport zu gewährleisten oder dazu beizutragen.

Beim Umschlag pallettierter Güter in Häfen ist es Aufgabe des Hebegeschirrs gemäß dieser Erfindung, durch Zusammenfassung mehrerer Palletten zu einer Hieve die Tragfähigkeit der jeweiligen Kräne, Ladebäume oder Containerbrücken optimal zu nutzen und durch erfindungsgemäßen Einsatz einer Übergabeeinrichtung eine Hieve von einem Kran an ein Fahrzeug mit Schwenkarm-Ladeeinrichtung zu übergeben ( oder umgekehrt) ohne daß dafür zusätzliches Personal eingesetzt und manuelle Arbeit geleistet werden muß.

Die Erfindung bietet die Möglichkeit, mit einer an einem Lkw angebrachten Ladeeinrichtung Ladegüter großer Ausdehnung und von großem Gewicht auf das eigene oder andere Transportfahrzeuge zu verladen und dabei die volle Ausdehnung der Ladefläche üblicher Transportfahrzeuge zu nutzen.

Die Erfindung bietet weiter die Möglichkeit, mit dem zugehörigen Hebegeschirr aus Palletten bestehende ganze Lkw-Ladungen in einem Arbeitsgang zeitsparend und ohne Fremdunterstützung ( z. B. durch Gabelstapler) zu verladen und damit beim Umschlag solcher Güter wesentliche Kosteneinsparungen zu erzielen.

Weiter bietet die Erfindung die Möglichkeit, den Umschlag von pallettierten Gütern von Eisenbahnwaggons auf Lkw und umgekehrt durch das Umschlagen von mehreren Palletten gleichzeitig zu rationalisieren.

Mit der vorgestellten Erfindung können Frachtcontainer und andere Großbehälter (z.B. Müllcontainer) be- und entladen werden.

Weiterhin bietet die Erfindung die Möglichkeit, auch schwere, nicht fahrfähige Kraftfahrzeuge nach Verkehrsunfällen zu bergen und ohne weitere Beschädigung auf der Ladefläche abzutransportieren.

Unter Benutzung des Hebegeschirrs, das Teil dieser Erfindung ist, lassen sich bei geringem Investitionsaufwand vorhandene Absetzkipper unter Ausnutzung ihrer schnellen Selbstladefähigkeit für den Transport pallettierter Güter und anderer Ladungen ähnlicher Dimensionen nutzen und Absetzkipper für das schnelle Beladen herkömmlicher Lkw und Anhänger einsetzen.

Im Hafenumschlag können Kräne großer Tragfähigkeit und Containerbrücken für den rationellen Umschlag pallettierter Güter eingesetzt und bei Verwendung von Lkw mit Ladeeinrichtung gemäß dieser Erfindung oder Absetzkippern für den Anschlußtransport weitere wesentliche Rationalisierungseffekte erzielt werden. Durch die besonderen Eigenschaften des Hebegeschirrs dieser Erfindung ist es weiterhin möglich, besonders pallettierte Güter auch dann in großen Hieven aus Schiffsladeräumen zu löschen, wenn nicht alle zum Anschlagen des Geschirrs erforderlichen Seiten der Hieve sofort zugänglich sind.

Im folgenden wird die Erfindung anhand von Zeichnungen näher erläutert. Dabei zeigen die Zeichnungen lediglich Ausführungsbeispiele und schließen andere denkbare erfindungsgemäße Gestaltungsformen nicht aus.

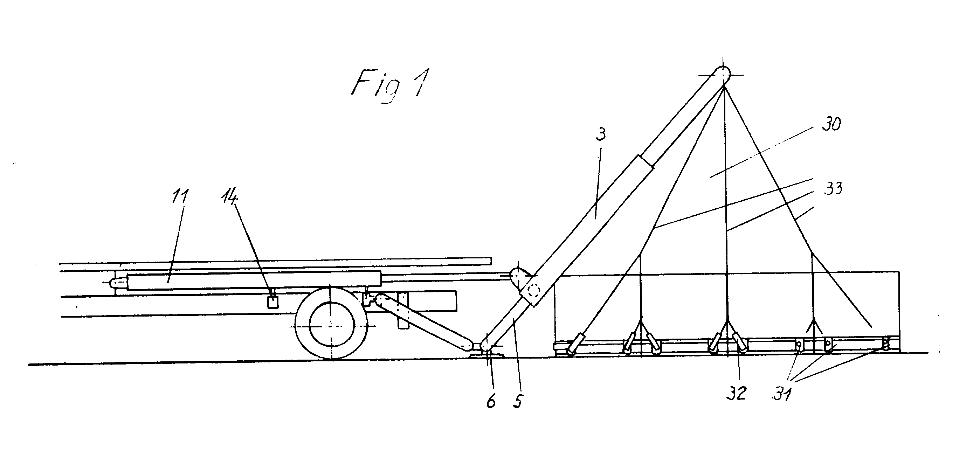

Fig. 1 gibt eine allgemeine Übersicht über eine Ausführungsform der Ladeeinrichtung mit einer durch das Ladegeschirr zusammengefaßten Hieve von 8 Palletten in Arbeitsstellung.

Fig. 2 zeigt schematisch den rückwärtigen Teil eines Lkw mit Ladeeinrichtung in Arbeitsstellung von der Seite und in Fig. 2 a von hinten gesehen.

Fig. 3 zeigt die gleiche Ladeeinrichtung in Transportstellung,

Fig. 4 ein weiteres Ausführungsbeispiel von der Seite gesehen und Fig. 4 a von hinten gesehen in Arbeitsstellung und

Fig. 5 und 5 a in Transportstellung.

Fig. 6 zeigt das Hebegeschirr mit seinen wesentlichen Teilen,

Fig. 7 die Pallettenentnahme aus größeren Lagern,

Fig. 8 und 9 den Pallettenträger (31),

Fig. 10 und 11 Ausführungsformen der Endplatte (42) des Pallettenträgers (31),

Fig. 12 u. 13 die Nutzung des Hebegeschirrs für eine unterschiedliche Anzahl von Palletten,

Fig. 14 den Seilhalter (93),

Fig. 15 das Anschlagglied (32),

Fig. 16 den Fußhaken,

Fig. 17 den Lastarm (39),
Fig. 18 den Doppelhaken (38),
Fig. 19 und 20 eine Lkw-Bordwand als Bestandteil des Hebegeschirrs,
Fig. 21 Ladeklappen (41) für Absetzkipper und
Fig. 22 Führungsgabeln (40) besonders für Fahrzeuge ohne Bordwand.

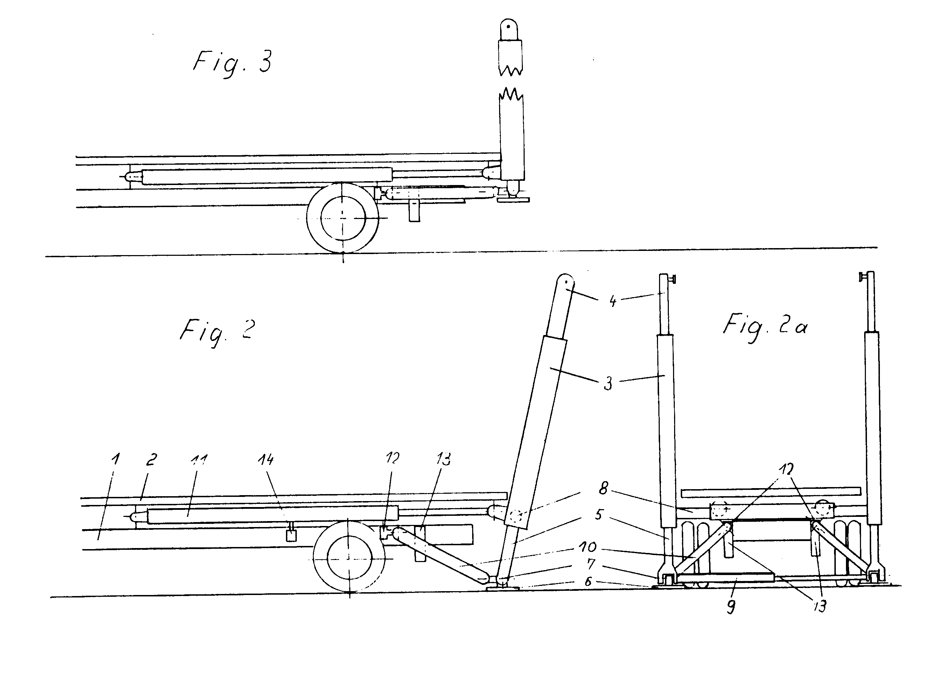

In Fig. 2,2a und 3 ist der Rahmen des Lkw (1) und die Ladefläche (2) erkennbar. Die Schwenkarme (3) sind nach oben teleskopierbar(4) und besitzen integriert nach unten ausfahrbare Stützstempel (5), die auf Bodenplatten (6) drehbar um die Schwenkachse (7) befestigt sind. Durch Ausfahren der Stützstempel (5) bis die Bodenplatten (6) auf den Boden abgesenkt sind, wird der Drehpunkt der Schwenkarme (3) in Bodennähe verlegt und die auf die belasteten Schwenkarme (3) wirkenden senkrechten Kräfte werden ohne Inanspruchnahme des Fahrgestells des Lkw direkt in den Boden abgeleitet.

Die Schwenkarme (3) sind durch ein teleskopierbares Querhaupt (8) und einen ebenfalls teleskopierbaren Bodenplattenverbinder (9) miteinander verbunden. Beide Verbindungen sind in ihren Endstellungen (Transportstellung: Schwenkarme (3) innerhalb des Breitenprofils des Fahrzeugs uni Arbeitsstellung: Schwenkarme außerhalb der Ladeflächenbreite) arretierbar. Die Bodenplatten (6) sind weiter in zwei Dimensionen drehbar mit Lenkern (10) verbunden, die am Fahrzeugrahmen (2) in zwei Dimensionen drehbar befestigt sind. Die eine Drehachse ist quer zur Fahrzeuglängsachse nach innen oben geneigt, die zweite Drehachse ist dazu um 90° gedreht.

In Transportstellung (vergl. Fig. 3) sind die Stützstempel (5) eingezogen, die Schwenkarme (3) befinden sich innerhalb des Fahrzeug-Breitenprofils hinter der Ladefläche. Die Lenker (10) befinden sich etwa parallel zum Fahrzeugrahmen (1).

Während des Ausfahrens der Schwenkarme (3) in Arbeitsstellung ( nach Lösen der Arretierungen) werden die Schwenkarme (3) von den Schwenkzylindern (11) getragen. Durch Ausfahren der Stützstempel (5) werden die Bodenplatten nach unten bewegt. Dadurch werden die Lenker (10) mitgenommen, die nun einerseits durch ihre Lagerung auf schräger Welle, andererseits durch die entsprechend schrägen Lenker-Gleitflächen (13) geführt, nach außen unten schwenken, die Bodenplatten (6) außerhalb des Fahrzeugprofils führen und die Schwenkarme (3) aus ihren Teleskopführungen ziehen.

In ihrem unteren Teil sind die Lenkergleitflächen(13) senkrecht ausgeführt, sodaß die Bodenplatten (6)(nachdem sie weit genug ausgeschwenkt sind) bei Betätigung der Stützstempel (5) nur noch eine senkrechte Bewegung ausführen.

In dem Bodenplattenverbinder (9) befindet sich eine Zugfeder, die mit Beginn des Ausfahrens der Schwenkarme (3) gespannt wird und bewirkt, daß beim Einfahren der Bodenplatten (6) und Lenker (10) von den Gleitflächen (13) geführt, sich nach innen bewegen.

Nach Erreichen der Arbeitsstellung werden Querhaupt (8) und Bodenplattenverbinder (9) in ihren Endstellungen arretiert.

Die Schwenkzylinder (11) sind einerseits drehbar am Querhaupt (8) und andererseits drehbar am Fahrzeugrahmen (1) angelenkt. Die für das Bewegen der Last durch Schwenken der Schwenkarme (3) erforderlichen Stellkräfte werden von den Schwenkzylindern (11) durch das Querhaupt (8) auf die Schwenkarme (3) übertragen. Um den Nachteil bisher z.B. bei Absetzkippern verwirklichten Antriebe der Schwenkarme, daß nämlich gerade bei schräger Stellung der Schwenkarme einerseits die auftretenden Lastmomente am größten, andererseits aber der Hebelarm des Kraftangriffs immer geringer wird, zu vermeiden, wird in Ausführung dieser Erfindung der Hebelarm des Kraftangriffs der Schwenkzylinder (11) durch Aus- und Einfahren der Stützstempel (5) ständig in etwa konstant gehalten. Der dazu nötige Steuerimpuls wird durch die Stützstempel-Steuerventile (14) zwischen Schwenkzylinder (11) und Fahrzeugrahmen (1) abgegriffen. Dieser Steuervorgang wirkt selbsttätig, egal, ob er durch Eindrücken der Bodenplatten (6) in weichen Untergrund, durch Bewegung der Schwenkarme (3) oder dadurch ausgelöst wird, daß beim Abheben der Last von der Ladefläche die Fahrzeugfederung sich entspannte und eine Aufwärtsbewegung der Ladefläche (2) und Fahrzeugrahmen (1) bewirkt. Dadurch dass die beiden Stützstempel (5) unabhängig voneinander gesteuert werden,wird auch eine Querneigung des Fahrzeugs automatisch ausgeglichen.

Durch sinnvolle Gestaltung der Auflageflächen am Ober- und Untergurt des Querhauptes (8) im Bereich des Fahrzeugrahmens (1) kann sichergestellt werden, daß in Transportstellung und beim Absetzen der Last auf die Ladefläche (2) diese gegen den Rahmen (1) abgestützt wird.

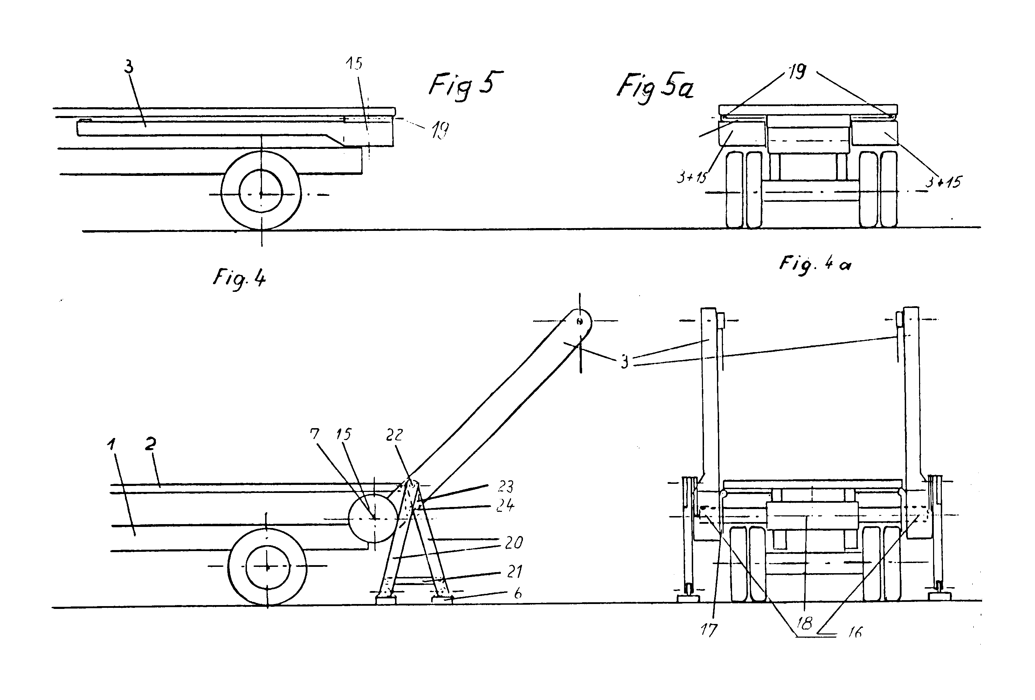

In Fig. 4, 4a, 5 und 5a ist ein weiteres Ausführungsbeispiel für die Ladeeinrichtung gemäß dieser Erfindung dargestellt. Die Schwenkarme (3) sind mit Drehkolbenanlagen (15) fest verbunden und drehen sich um die Achse der Schwenkwelle (7).

In den hohlen Wellen der Drehkolbenanlagen (15) befinden sich nicht drehbare, aber mit einer Stelleinrichtung (18) verschiebbare Zapfen (16). Die Zapfen (16) und die hohlen Wellen der Drehkolbenanlagen (15) sind z.B. durch Keilwellenprofile kraftschlüssig verbunden, sodaß sich die mit den Schwenkarmen (3) verbundenen äußeren Teile der Drehkolbenanlagen (15) um die Achse der Schwenkwelle (7) unter Kraftentfaltung drehen können. Die Schwenkwelle (7) ist zur Übertragung des auf sie wirkenden Drehmoments fest mit dem Rahmen des Fahrzeugs verbunden. Die Schwenkarme (3) sind in den Scharnierschenkeln (17) drehbar gelagert.

Um die Schwenkarme (3) in Transportstellung unter die Ladefläche (2) ohne Überschreiten des Breitenprofils zu bringen, werden sie mit Hilfe der Drehkolbenanlagen (15) in eine Position waagerecht voraus gebracht (Fig. 5). Die Zapfen (16) werden mit der Stelleinrichtung (18) zur Fahrzeugmitte bewegt und dadurch aus den hohlen Wellen der Drehkolbenanlagen (15) herausgezogen. Danach werden durch die Stelleinrichtung (18) oder mit besonderer Vorrichtung die Schwenkarme (3) um die Achsen (19) nach innen geklappt.

Alternativ dazu können die Schwenkarme (3) auch unter Wegfall der verschiebbaren Zapfen (16) auf der Schwenkwelle (7) verschiebbar angeordnet werden, sodaß sie in Transportstellung nach innen bewegt werden können.

Die Stützbeine (20) sind mit einer verstellbaren Strebe (21) miteinander verbunden. Durch Verstellen der Strebe (21) läßt sich der Spreizwinkel der Stützbeine (20) variieren. Die Stützbeine sind mit beweglich gelagerten Bodenplatten (6) versehen. Beide Stützbeine (20) sind im Punkt (22) drehbar mit der Traglasche (23) verbunden, die wiederum drehbar am Anlenkzapfen (24) des Lastarms (3) befestigt ist. Die Anlenkzapfen (24) sind, gesehen bei Schwenkarmstellung über der Ladefläche unterhalb der Längsachse des Schwenkarms (3) befestigt. Dadurch wird sichergestellt, daß auch bei unterschiedlichen Neigungswinkeln der Schwenkarme (3) beim Aufnehmen der Ladung vom Boden einerseits und beim Absetzen der Ladung auf der Ladefläche (2) andererseits die Gegengewichtswirkung des Fahrzeuggewichts gleich ist.

Beim Absenken des Schwenkarms (3) setzen die Stützbeine (20) auf dem Boden auf. Mit Hilfe der Drehkraft der Drehkolbenanlage (15) wird die Schwenkwelle (7) über den Anlenkzapfen (24) angehoben. Dabei gleicht die Traglasche (23) um den durch die Stützbeine fixierten Punkt (22) sich drehend, die auftretende waagerechte Bewegung des Anlenkzapfens (24) aus, sodaß die Schwenkwelle (7) und damit das Fahrzeug seine Position in waagerechter Richtung nicht verändert. ( Der seitliche Spielraum der Traglasche (23) kann durch zweckmäßig angebrachte Anschläge begrenzt werden). Werden beim Aufnehmen der Last die Schwenkarme (3) nach oben geschwenkt, so wirkt das wie vorher geschildert angehobene Fahrzeuggewicht als Gegengewicht. Die aufzubringende Hebekraft wird im Bereich ihres Maximalwertes um den Anteil des Fahrzeuggewichts vermindert und die hydraulische Hebevorrichtung kann entsprechend geringer dimensioniert werden. Beim Absenken der Last wirkt das anteilige Fahrzeuggewicht als Gegengewicht und mindert in gleicher Weise die von der hydraulischen Hebevorrichtung aufzubringenden Verzögerungskräfte. Darüber hinaus wirkt sich die Aufteilung der Lasten zwischen Stützvorrichtung und Anlenkung der Schwenkarme (3) an das Fahrzeug vorteilhaft auf die Dimensionierung der Bauteile aus.

Alternativ zu dieser Ausführungsform der Abstützeinrichtung kann der Drehpunkt (22) der Stützbeine (20) unter Verzicht auf Vorteile fluchtend mit der Achse der Schwenkwelle (7) vorgesehen sein oder auf eine Abstützvorrichtung ganz verzichtet werden.

Erfindungsgemäß kann die Ladeeinrichtung so gestaltet sein, daß die Hub- und Drehkraft-Erzeugung durch einen handelsüblichen hydraulischen Schwenkantrieb erfolgt, der am Rahmen des Fahrzeugs z.B. in der Fahrzeugmitte befestigt ist, mit seiner Antriebswelle (7) Teil der am Fahrzeugrahmen (2) drehbar gelagerten Schwenkwelle (7) ist und über die verschiebbaren Zapfen (16) die Schwenkarme (3) bewegt.

In einer weiteren Alternative kann die Hub- und Drehkraft für die Schwenkarme (3) durch handelsübliche Hydraulikzylinder erfolgen, die innerhalb oder außerhalb des Fahrzeugrahmens (1) etwa waagerecht angebracht sind und über die zu diesem Zweck gekröpfte Schwenkwelle (7) kurbeltriebförmig die Kraft auf die drehbar am Fahrzeugrahmen (1) gelagerte Schwenkwelle (7) übertragen.

Zur Vergrößerung der Reichweite der Schwenkarme (3) können diese mit hydraulisch teleskopierbaren Oberteilen (4) versehen sein.

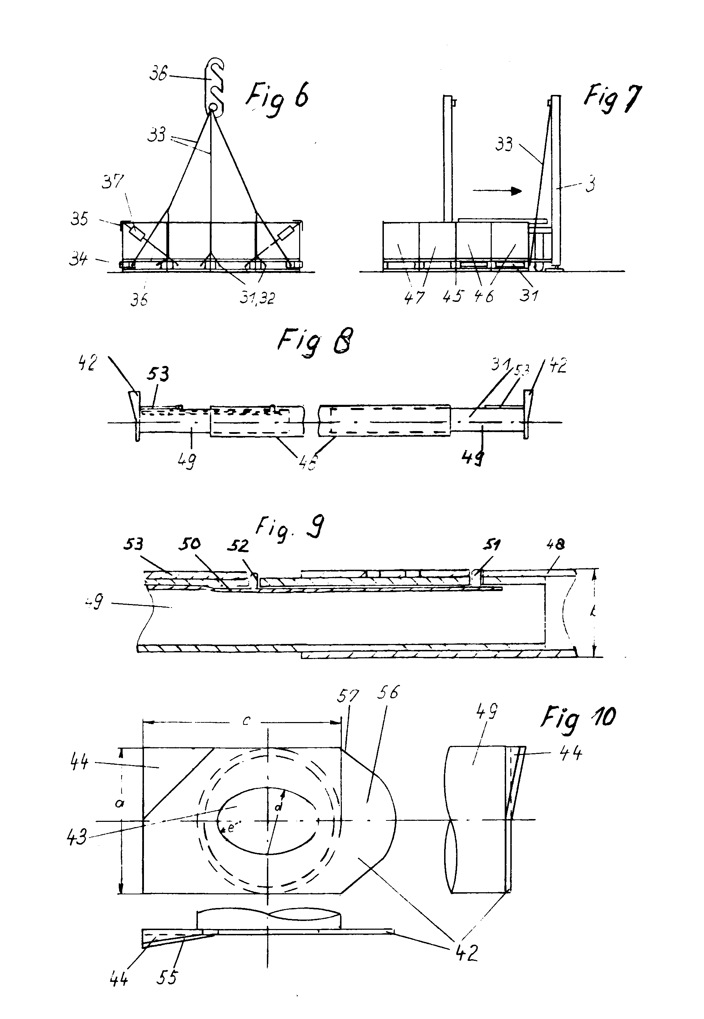

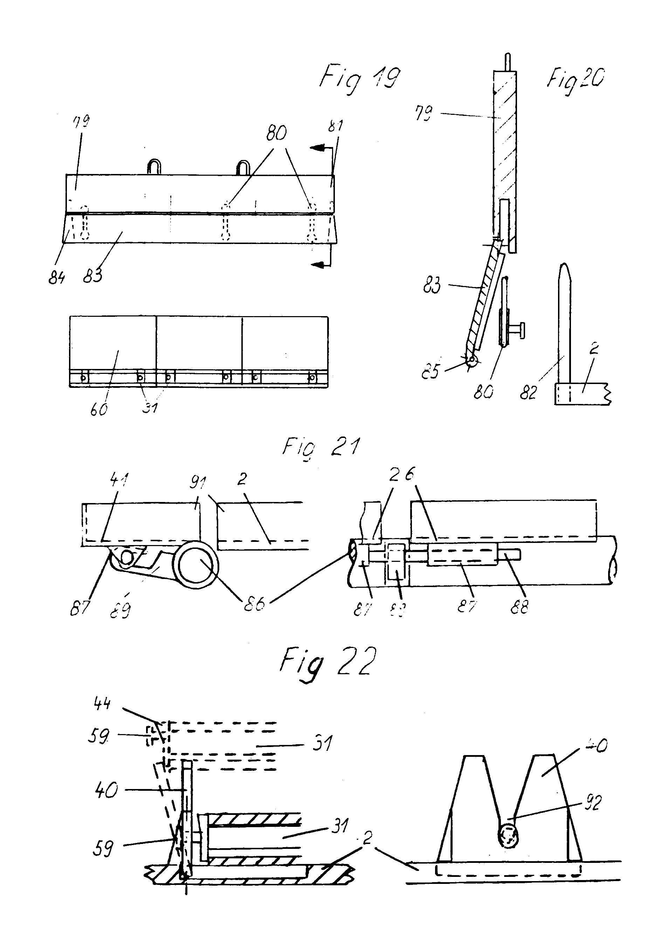

Wesentliche Bestandteile des Hebegeschirrs - (30) (vergl. Fig. 6) gemäß dieser Erfindung sind die Palettenträger(31) Anschlagglieder (32) und lasttragende Stränge (33). Weiter können erfindungsgemäß zum Hebegeschirr gehören: Fußhaken(34) Sicherungswinkel (35), Sicherungsstränge (36), Spannschlösser (37), Doppelhaken (38), Lastarme (39 Fig.17) und bei Benutzung des Hebegeschirrs für Lkw ohne Ladebordwände Führungsgabeln (40 Fig. 22) und bei Benutzung für Absetzkipper Ladeklappen(41 Fig. 21).

Zum Hebegeschirr für ein Fahrzeug gehören zwei Sätze lasttragende Stränge (33) mit Anschlaggliedern (32) und für je 2 später in Fahrtrichtung nebeneinanderstehende Paletten mindestens ein, in der Regel 2 Paletenträger (31).

Der Palettenträger (31) (Fig. 8 u. 9) hat vorzugsweise runden Querschnitt, andere Querschnittsformen (oval, quadratisch, rechteckig, dreieckig oder anders) sind denkbar. An den Enden des Palettenträgers (31) befinden sich Endplatten (42) mit vorzugsweise etwa ovalen Löchern (43) zum Aufnehmen der Anschlagglieder (32).

Der Pallettenträger (31) wird erfindungsgemäß in die Freiräume zwischen den Pallettenfüßen nahe der Außenfüße in der flacheren Stellung eingebracht. Durch Drehen um etwa 90° wird der Pallettenträger (31) in Hebestellung geführt. Dabei erfassen zuerst die abgewinkelten Ecken (44) der Endplatten (42) die oberen äußeren Begrenzungen der Palletten, drücken, falls erforderlich, die Palletten zusammen und sichern die Palletten gegen Verschiebungen beim Hebevorgang. Nun werden die Anschlagglieder (32) mit den lasttragenden Strängen (33) angebracht und die Last kann gehoben werden. Falls die manuelle Kraft zum vollständigen Drehen der Pallettenträger nicht ausreicht, wird bei Beginn des Hebevorganges diese Kraft dadurch erbracht, daß durch die etwa ovale Gestaltung der Löcher (43) in den Endplatten (42) die Hubkraft außermittig angreift und die Drehung des Pallettenträgers (31) in Hebestellung (Endplatte etwa aufrecht) vollendet.

Sind die zu verladenden Palletten aus einem größeren Lagerbereich zu entnehmen (Fig. 7), so werden die eingebrachten Pallettenträger (31) nur an der zugänglichen Seite angeschlagen. Zu Beginn des Hebevorganges setzen sich beim Drehen der Pallettenträger (31) die abgewinkelten Ecken (44) der Endplatten (42) in den Spalt (45) zwischen den aufzunehmenden (46) und den im Stapel verbleibenden (47) Palletten. Bei Fortsetzung des Hebevorganges und zweckmäßiger Positionierung des Fahrzeugs gleiten die aufzunehmenden Palletten in Pfeilrichtung und es werden die bisher unzugänglichen Löcher (43) der Pallettenträger ( 31) zum Anschlagen der restlichen lasttragenden Stränge (33) freigelegt.

Der Pallettenträger (31) besteht vorzugsweise aus einem Mittelstück(48) und zwei im Mittelstück teleskopartig verschiebbaren Seitenstücken (49). Er kann dadurch auf das für die zu erfassenden Palletten erforderliche Maß gebracht werden.

Die Arretierung der Seitenstücke (49) (Fig. 9) kann durch eine in den Seitenstücken angebrachte Feder (50) erfolgen, auf der zwei Bolzen befestigt sind. Der Arretierbolzen (51) ragt durch ein Loch im Seitenstück (49) in entsprechend auswählbare Löcher im Mittelstück (48). Durch Drücken auf den Bedienungsbolzen (52) im Seitenstück 49 wird die Feder (50) nach unten bewegt und der Arretierbolzen (51) rastet aus dem Mittelstück (48) aus. Nach dem Loslassen des Bedienungsbolzens (52) drückt die Federkraft den Arretierbolzen (51) in die ausgewählte Bohrung des Mittelstücks (48). Andere Formen der Arretierung sind denkbar.

Erfindungsgemäß können die Pallettenträger (31) auch mit nur einem teleskopierbaren Seitenstück (49) oder ohne Verstellmöglichkeit ausgeführt sein.

Die Seitenstücke (49) können zur Vermeidung von Durchbiegungen unter Last mit Verstärkungen (53) versehen sein, die im tragenden Bereich den Querschnitt der Seitenstücke (49) auf die Abmessungen des Mittelstücks (48) bringen. Um eine seitliches Verrutschen des Pallettenträgers unter Last zu vermeiden, können diese Verstärkungen durch Verwendung rutschfester Werkstoffe (Gummi, Kunststoffe, genoppte oder mit Spitzen versehene Metallteile o.ä.) zweckentsprechend hergerichtet sein.

Die Seitenstücke (49) sind durch Endplatten (42 Fig. 10) abgeschlossen. Das Maß (a) der Endlatten (42) soll vorzugsweise das entsprechende Querschnittsmaß (b) des Mittelstücks(48) nicht überschreiten, um das Einschieben des Pallettenträgers (31) zu erleichtern. Das Maß (c) der Endplatten (42) soll vorzugsweise größer sein als der durch die Pallettenfüße gebildete senkrechte Freiraum ( nach Norm 100 mm), um eine erfindungsgemäß richtige Positionierung des Pallettenträgers (31) in Hebestellung vor, während und nach dem Hebevorgang sicherzustellen.

Die Ecke (44) der Endplatte (42) ist vorzugsweise nach außen abgewinkelt und an der Kante (45) angeschärft oder gerundet.

Dadurch wird sichergestellt, daß die aufzunehmenden Palletten vom Pallettenträger (31) auch erfindungsgemäß erfaßt werden, wenn sie bündig neben anderen Palletten stehen oder die beiden Palletten eines Paares nicht bündig stehen.

Die Lasche (56) der Endplatte (42) ist an ihrer Kante (57) vorzugsweise so geschrägt ausgebildet, daß sie bei Drehung des Pallettenträgers in Hebestellung mit dem unteren Verbindungsbrett der Pallettenfüße erst in Berührung kommt, nachdem die äußere Ecke (44) die obere Begrenzung der Pallette bereits erfaßt hat. Die Kante (57) der Lasche (56) ist in ihrem mittleren Teil vorzugsweise rundausgebildet, um der Drehung des Pallettenträgers in Hebestellung möglichst geringen Widerstand entgegenzusetzen. Ein Abwinkeln der Lasche (56) entsprechend der Abwinkelung der Ecke (44) kann zweckmäßig sein.

In der Endplatte (42) befinden sich etwa ovale Löcher (43) mit größter Ausdehnung in Richtung der größten Ausdehnung der Endplatte, die aus zwei gegenüberliegenden Kreisbögen mit einem Radius (d) bestehen, der etwas geringer ist als der Innendurchmesser des runden Pallettenträgers (31) und zwei sich gegenüberliegenden Kreisbögen mit einem Radius (d) bestehen, der etwas größer ist als der Radius des Zapfens (62) des Anschlaggleides (32).

Bei Verwendung von anderen als runden Querschnittsformen des Pallettenträgers (31) können sich andere Lochformen als zweckmäßig zur Verwirklichung der erfinderischen Überlegungen erweisen.

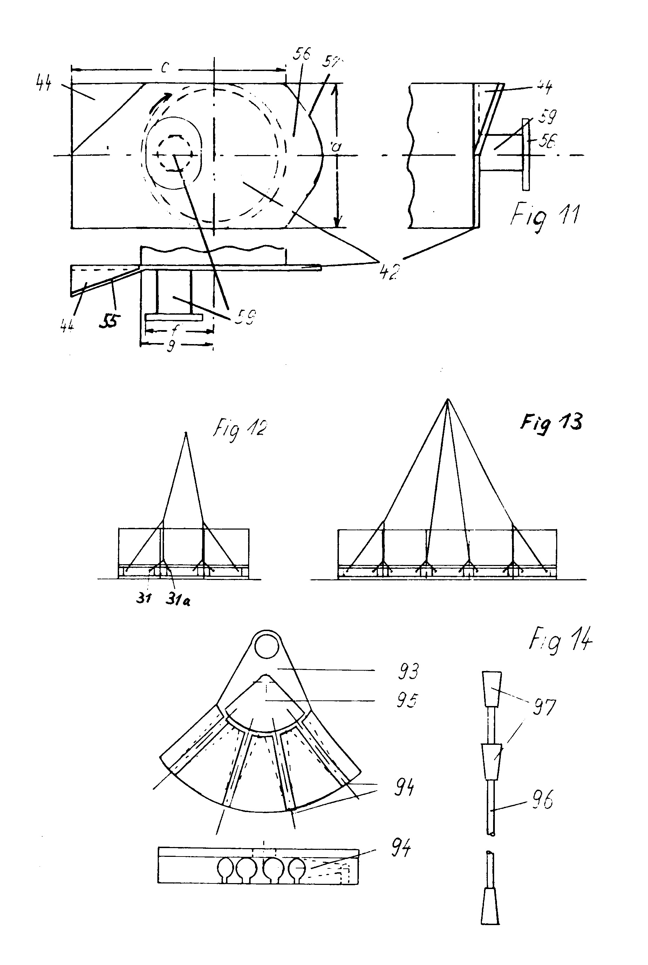

Eine andere Form des Pallettenträgers (31) zeigt die Fig.11. in dieser Ausführungsform ist an der Endplatte (42) ein Aufhängezapfen (59) zum Anschlagen der lasttragenden Stränge (33) vorzugsweise außermittig zur Längsachse des Pallettenträgers (31) in Richtung der größten Ausdehnung der Endplatte (42) fest angebracht, um einerseits beim Beginn des Hebevorganges den Pallettenträger (31) mit Hebelkraft zu drehen und dabei eine ausreichende Kraft zu erzeugen, um ein spaltenloses Zusammenrücken der Palletten auszulösen und andererseits den Pallettenträger (31) unter Last in stabilem Gleichgewicht zu halten. Das Maß (f) darf dabei nicht das Maß (g) überschreiten, um bei zusammenstehenden Palletten dem Aufhängezapfen (59) Freiraum in den Öffnungen der nicht mehr aufzunehmenden Nachbarpallette zu lassen. In bestimmten Fällen ist auch eine mittige Anbringung der Aufhängezapfen (59) denkbar.

Der Aufhängezapfen (59) besteht aus einem zylindrischen Teil mit einer Abschlußplatte etwa ovaler Kontur. Dabei ist auch die schmalere Abmessung der Abschlußplatte größer als der zylindrische Teil und weist in Richtung der größten Ausdehnung der Endplatte (42), um in Hebestellung eine sichere Verriegelung mit dem Lastarm (39) zu gewährleisten. Andere Konturen der Abdeckplatte sind denkbar.

Weiterhin können die Abschlußplatten der Aufhängezapfen (59) mit Löchern (43) versehen sein, sodaß die Pallettenträger sowohl mit Lastarmen (39) als auch mit Anschlaggliedern (32) verwendet werden können. Auch können die Aufhängezapfen (59) in die Endplatten (42) einschiebbar und in beiden Endstellungen verriegelbar gestaltet sein, um für den Transport die Gesamtlänge der Pallettenträger (31) dem verfügbaren Freiraum auf der Ladefläche von Transportfahrzeugen anpassen zu können.

Die lasttragenden Stränge (33) sind je nach der Anzahl der gleichzeitig anzuhebenden Palletten unterschiedlich kombiniert.

Eine Gestaltungsform ist in Fig. 12 für 3 Pallettenpaare und in Fig. 13 für 5 Pallettenpaare dargestellt. Andere Gestaltungsformen sind denkbar. Erfindungsgemäß verzweigen sich die lasttragenden Stränge (33) nach unten und werden, wie in Fig. 12 dargestellt, jeweils mit zwei Pallettenträgern (31 und 31 a) unterschiedlicher Pallettenpaare (60 und 61) verbunden, sodaß unter Last die beiden Pallettenpaare fest zusammengepreßt werden.

Die äußeren lasttragenden Stränge (33) sind in der Regel mit Fußhaken (34) ausgestattet.

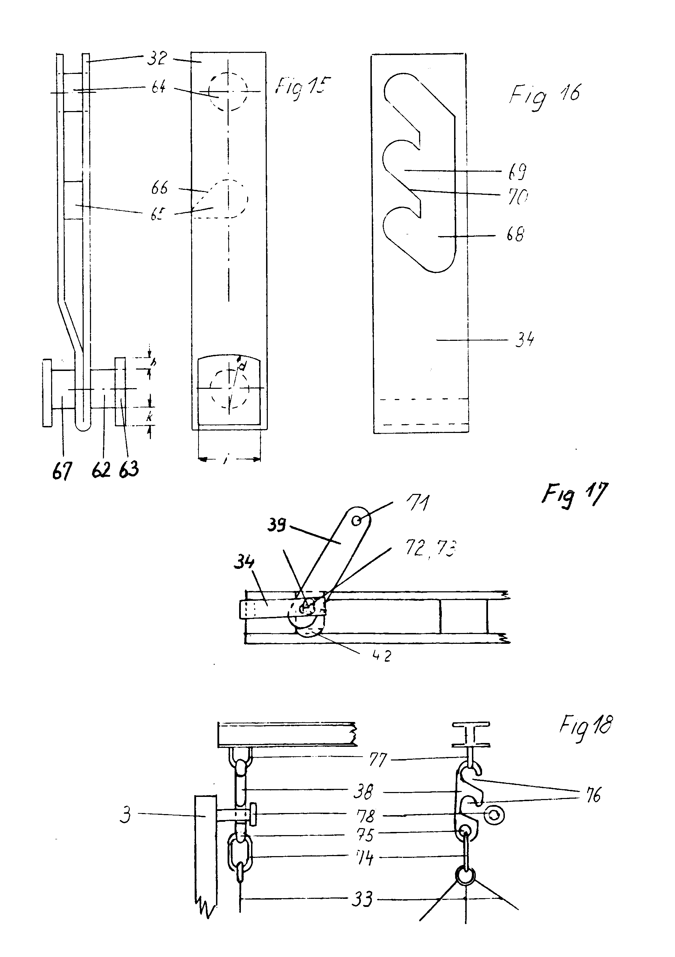

Werden als lasttragende Stränge (33) Stahlseile verwendet, so kann erfindungsgemäß an den Verzweigungspunkten ein kreissegmentförmiger Seilhalter (93 Fig. 14) verwendet werden. Er besitzt in seinem Oberteil ein Auge, das auch die Form eines Bügelschlosses haben kann. Uber den verstärkten unteren Teil des Seilhalters (93) verteilt, sind kegelstumpfförmige, sich nach außen verjüngende Taschen (94) eingearbeitet, die seitlich so aufgeschlitzt sind, daß ein nach der Tragkraft dazugehöriges Seil eingelegt werden kann.

Die oberen Offnungen der Taschen (94) sind durch eine drehbare Sicherungsplatte (95) verschließbar. Sie kann sicherbar sein.

das als lasttragender Strang zur Verwendung kommende Seil (96) trägt an beiden Enden kegelförmige Preßseilklemmen, deren Kegelform der Form der Taschen (94) entspricht. Das Seil kann erfindungsgemäß mehrere Presseilklemmen (97) übereinander tragen, sodaß die Seillänge unterschiedlichen Bedürfnissen angepasst werden kann.

Die Anschlagglieder (32) sind bandförmig und in ihrem oberen Teil gabelförmig ausgebildet und tragen an ihrem unteren Ende einen runden Zapfen (62), an diesem wiederum ist eine Schlußplatte (63) fest angebracht. Die obere Kante der Schlußplatte ist gerundet mit dem Radius (d), der dem Radius der größeren Bogen des Loches (43) in der Endplatte (42) des Pallettenträgers (31) entspricht. Das Maß (h) ist etwas geringer als der Abstand des kleineren Bogens im Loch (43) der Endplatte (42) vom Innendurchmesser des Pallettenträgers (31) Das Maß (i) der Schlußplatte (63) entspricht der größten Offnungsweite des Loches (43) und das Maß (k) ist größer als das Maß (i). Die Länge des Zapfens ist so gering wie möglich zu halten.

Erfindungsgemäß wird durch diese Gestaltung von Zapfen (62), Schlußplatte (63) und Loch (43) der Endplatte 42 des Pallettenträgers (31) sichergestellt, daß das Anschlaglied (32) nur in einer bestimmten Stellung relativ zum Loch (43) mit dem unteren Teil zuerst schräg eingeführt werden kann und durch Bewegen in eine Lage rechtwinklig zur Längsachse des Pallettenträgers mit diesem so verbunden wird, daß sie sich weder unter Last noch ohne Last selbsttätig lösen kann.

Am oberen Ende des Anschlaggliedes (32) ist ein herausnehmbarer und sicherbarer Bolzen (65) zur Aufnahme des Fußhakens (34) angebracht. Dieser Bolzen (65) besitzt eine schräge Fläche (66), die mit der Schrägung der Kanten (70) des Fußhakens (34) korrespondiert.

Gegenüber dem unteren Zapfen (62) kann ein weiterer, ähnlich gestalteter Zapfen (67) zur Aufnahme in Führungsgabeln (40) angebracht sein.

Die Fußhaken (34) Fig. 16 tragen an ihrem langen Schenkel ein Langloch (68) mit nach oben weisenden zahrartigen Erweiterungen (69) deren Offnungsweite dem Durchmesser des Bolzens (65) entspricht. Die Schrägung der Kanten (70) ist unterschiedlich und ist so ausgelegt, daß der Fußhaken (34) in lasttragender Stellung des Anschlaggliedes (32) mit seiner Oberkante auf das obere Ende des Pallettenfußes außen weist. Dadurc h ist sichergestellt, daß auch bei unterschiedlichen Abmessungen der Pallettenfüße der Fußhaken (34) immer am oberen Teil des Fußes angreift.

Der kürzere Schenkel des Fußhakens (34) ist zweimal abgewinkelt und umfaßt so den Pallettenfuß.

Bei Verwendung von Pallettentrgern mit Aufhängezapfen (59) erfolgt die Verbindung zwischen lasttragendem Strang (33) und dem Aufhängezapfen (59) durch einen Lastarm (39).

Dieser besitzt oben ein Auge (71) zur Befestigung des lasttragenden Stranges (33) und unten eine Öffnung (72) mit einer Kontur, die derjenigen der Abschlußplatte des Aufhängezapfens (59) entspricht und mit der größten Öffnungsweite in Richtung der Längsachse des Lastarms (39) liegt. Dadurch kann der Lastarm (39) nur in einer bestimmten Stellung über den Aufhängezapfen (59) gestreift werden, während in allen anderen Stellungen insbesondere unter Last, eine nicht selbsttätig lösbare Verbindung zwischen den Teilen besteht.

An den Lastarm (39), der zu den äußersten Pallettenträgern einer Hieve führt, sind zusätzlich auf der zum Pallettenträger gewandten Seite Fußhakten (34) um die Öffnung (72) drehbar angebracht. Durch die Anbringung des Fußhakens (34) zwischen Lastarm (39) und Pallettenträger (31) wird bewirkt, daß unter Last der Fußhaken (39) in einer Lage parallel zur Endplatte (42) und damit zum Pallettenträger gehalten wird. Die Fußhaken besitzen dann eine Bohrung (73) größer als die Abschlußplatte des Aufhängezapfens (59), sodaß Lastarm (39) und Fußhaken (34) in verschiedenen Stellungen des Lastarms (39) bei etwa waagerechtem Fußhaken (34) übergestreift werden kann. Der andere Schenkel des Fußhakens (34) ist zweimalrechtwinklig abgebogen und umfaßt den äußeren Pallettenfuß. Dadurch wird der äußerste Pallettenträger (31) der Hieve auch unter Last in unmittelbarer Nähe der äußeren Pallettenfüße gehalten.

Erfindungsgemäß kann die Pallettenladung (Fig. 8) durch Sicherungswinkel (35) und Sicherungsstränge (36) während des Transports gesichert werden. Die Sicherungsstränge (36) sind dabei mit einem Verzweigungspunkt der lasttragenden Stränge (33) verbunden und bilden über diesen mit einem unteren lasttragenden Strang eine kraftschlüssige Verbindung zu einem Pallettenträger eines inneren Pallettenpaares. Die nötige Vorspannung kann durch Spannschlösser (37) in den Sicherungssträngen (36) herbeigeführt werden.

Die Sicherungswinkel (35) bestehen in der Regel aus zwei ineinander teleskopartig verschiebbaren und in verschiedenen Längen arretierbaren Teilen, sodaß ihre Länge den Abmessungen der Ladung angepasst werden kann. Sie können auch unverstellbar gefertigt sein.

Erfindungsgemäß können die lasttragenden Stränge (33) und die Sicherungsstränge (36) ganz oder teilweise in Form von Ketten, Polyestergurten, bandförmigen Metall- oder Kunststoffteilen oder Seilen gestaltet sein mit den zugehörigen Verbindungsgliedern.

Sollen die zu hebenden Lasten anstatt mit einer erfindungsgemäßen Ladeeinrichtung oder einem Absetzkipper z.B. mittels eines Kranes mit nur einem Lasthaken gehoben werden, so sind die oberen Aufhängeköpfe (74) des Hebegeschirrs mittels üblicher Quertraverse mit dem Kranhaken zu verbinden.

Soll z.B. in einem Hafen palletiertes Gut mit einem Kran unter Benutzung des erfindungsgemäßen Hebegeschirrs gelöscht und anschließend sofort z.B. mit Absetzkippern zum Endempfänger weiterbefördert werden, so kann das Hebegeschirr statt der oberen Aufhängeköpfe oder daran anschließend mit Doppelhaken (38) Fig. 18 ausgerüstet werden. Die lasttragenden Stränge oder die Aufhängeköpfe werden dann in dem Auge (75), das als Bügelschloß ausgebildet sein kann, handelsüblich befestigt.

Im darüber liegenden Teil befinden sich zwei übereinanderliegende, U-förmige, schräg nach oben gerichtete Ausnehmungen (76) mit seitlicher Offnung, die obere zur Aufnahme des Lastauges (77) der Quertraverse des Krans, die untere zur Aufnahme des Tragebolzens mit Endplatte (78) des Schwenkarms des Absetzkippers.

Beim Löschen wird die Hieve vom Kran bis kurz über die Ladefläche des Absetzkippers zwischen den Schwenkarmen geführt.

Nun werden die Schwenkarme in die unteren seitlichen Öffnungen des Doppelhakens eingeschwenkt. Durch Absenken der Traverse gleiten die Tragebolzen der Schwenkarme (3) bis zum runden Abschluß der Ausnehmungen (76) und übergeben die Last.

Bei weiterem Absenken der Traverse gleiten die Augen der Traverse aus der oberen Ausnehmung (76). Die hieve ist vom Absetzkipper übernommen und kann zum Weitertransport auf seiner Ladefläche abgesetzt werden.

Sollen mit dem Hebegeschirr (30) Fahrzeuge gehoben werden, so werden erfindungsgemäß je zwei Pallettenträger (31) unter den Rädern jeder Achse positioniert und jeweils ein unten geteilter lasttragender Strang (33) für die Pallettenträger (31) einer Achse angeschlagen.

Zur Anpassung des Hebegeschirrs (30) an unterschiedliche Verhältnisse können die lasttragenden Stränge (33) mit Verkürzungsgliedern ausgestattet sein.

In einer weiteren Ausführungsform kann das Hebegeschirr in Form von Ladeflächen-Bordwänden ausgebildet sein. Fig. 19 zeigt unten drei nebeneinanderstehende Pallettenpaare (60), miteinander durch Pallettenträger (31) verbunden. Darüber ist eine Bordwand gezeigt.

Das Bordwand-Oberteil (79) ist lasttragend ausgebildet und wird über Augen und lasttragende Stränge mit der Ladeeinrichtung verbunden.

Als Verbindung zwischen Bordwand-Oberteil (79) und Pallettenträgern (31) werden vornehmlich aus Drahtseil gefertigte Schlingen (80) verwendet (Fig. 20), in die oben und unten je eine Vollkausche eingebunden sind. Die untere Kausche trägt Zapfen (62) mit Schlußplatte (63) wie beim Anschlagglied (32) beschrieben.

Die obere Kausche besitzt einen durchgehenden und nach beiden Seiten überstehenden Bolzen.

Das Bordwand-Oberteil (79) ist mit nach unten offenen Schlitzen versehen, die der Dicke der oberen Kauschen entsprechen. Die aus der oberen Kausche herausragenden Bolzen werden von den verstärkten unteren Kanten des Bordwand-Oberteils (79) getragen. Die Schlitze sind so verteilt, daß alle gewünschten Pallettenabmessungen mit senkrecht hängenden Seilschlingen angeschlagen werden können.

Die senkrechten Endbegrenzungen (81) Fig. 20 des Bordwand-Oberteils (79) sind verstärkt undnach unten offen.

In die Außenkante der Ladefläche (2) sind einsteckbare und nach Entriegelung nach unten herausziehbare senkrechte Rungen (82) eingesetzt, die nach oben allseitig angeschrägt sind und in ihrem Querschnitt in die verstärkten Endbegrenzungen (81) des Bordwand-Oberteils (79) passen.

Das Bordwand-Unterteil (83) ist mit dem Bordwand-Oberteil (79) um eine waagerechte Achse drehbar verbunden. Sie läßt sich um 180° nach oben klappen und mit dem Bordwand-Oberteil (79) dann verriegeln. Durch Federkraft oder sonst in geeigneter Weise werden die freihängenden Bordwand-Unterteile (83) um etwa 5° nach außen abgewinkelt.

In das Bordwand-Unterteil (83) können der Ladefläche zugewandt, Sicken zur Aufnahme der Seilschlingen eingearbeitet sein, die eine Bewegung der Schlingen (80) mitsamt den zugehörigen Pallettenträgern (31) in Richtung der Fahrzeug-Längsachse verhindern und während des Transports damit eine Transportsicherungefunktion erfüllen.

Die senkrechten Endbegrenzungen (84) des Bordwand-Unterteils (83) sind U-förmig zur Ladefläche offen gestaltet, im oberen Teil mit parallelen Schenkeln, während sich der Schenkelabstand nach unten erweitert.

Werden die Bordwände von oben mit oder ohne Last zur Ladefläche abgesenkt, so kommen die Spitzen der Rungen (82) zuerst mit den etwas nach außen abgespreizten Endbegrenzungen (84) der Bordwand-Unterteile (83) in Berührung. Bei weiterem Absenken gleiten die Bordwand-Unterteile mit ihren Endbegrenzungen (84) von den Rungen geführt, in die richtige Position. Schließlich dringen die oberen Enden der Rungen (82) in die unten offenen Endbegrenzungen (81) der Bordwand-Oberteile (79) ein. Dabei drücken sie gegen die Oberkante der Endbegrenzungen (84) der Bordwand-Unterteile (84) und drücken diese gegen die spreizende Federkraft in senkrechte Lage.

Die Bordwand-Unterteile (83) werden unten über lösbare Scharniere (85) mit der Ladefläche (2) verbunden. Dadurch können die Bordwände, nachdem die Rungen (82) nach unten herausgezogen wurden, wie übliche Bordwände nach unten abgeklappt werden.

Die Verbindung der Bordwand-Ober- und Unterteile mit Stirn- und Rückwand erfolgt in üblicher Weise.

Für den Pallettentransport mit Absetzkippern werden diese (Fig. 21) mit zwei die Ladefläche nach hinten abschließenden Ladeklappen (41) ausgestattet. Sie dienen wärend des Absetzens der Ladung auf der Ladefläche der genauen Positionierung, der Erweiterung der Ladefläche auf ein pallettengerechtes Maß und der Ladungssicherung während des Transportes.

Die Ladeklappen (41) haben I-förmigen Querschnitt und sind an den von der Fahrzeugmitte abgewandten Seiten durch Endbleche abgeschlossen. Sie sind auf der die Schwenkarme des Absetzkippers verbindenden Hauptwelle (86) drehbar angebracht. Die Lagerböcke (87) des Schieberiegels (88) sind so an den Ladeklappen (41) befestigt, daß mit dem Schieberiegel (88) eine kraftschlüssige Verbindung zu dem Fanghaken (83) hergestellt wird.

An den Endblechen sind an den Verbindungspunkten (91) Spannschlösser angebracht, die die Ladeklappen (41) in waagerechter Position mit der Ladefläche lasttragend verbinden.

Bei Benutzung des Absetzkippers zum Transport von Absetzbehältern hängen die Ladeklappen nach unten.

Beim Einsatz zum Pallettentransport werden die Ladeklappen (41) mittels des Schieberiegels (88) mit dem Fanghaken (89) verbunden. Sobald die Last unmittelbar vor dem Absetzen über der Ladefläche schwebt, wird der Fanghaken (89) betätigt. Dabei führen die Ladeklappen (41) die noch schwebende Last in die richtige Position.

Gemäß Fig. 22 können auf der Ladefläche (2) Führungsgabeln (40) angebracht sein. Die Führungsgabeln (40 dienen der Führung der Ladung kurz vor dem Absetzen auf die Ladefläche in die richtige Position, und zwar quer zur Fahrtrichtung durch die Flächen der Führungsgabeln und in Fahrtrichtung durch die Aufnahme der Aufhängezapfen (59) oder der Zapfen (67) des Anschlagliedes (32) in die Öffnung der Gabel. Nach dem Absetzen der Ladung dienen sie der Transportsicherung dadurch,daß sie den Aufhängezapfen (59) und damit den Pallettenträgern (31) eine in jeder Richtung unveränderliche Lage geben.

Im folgenden wird die Wirkungsweise im Zusammenhang mit dem Aufhängezapfen (59) beschrieben. Die Führungsgabeln(40) besitzen eine nach oben gerichtete Öffnung, die erheblich größer ist als der Durchmesser des zylindrischen Teils der Aufhängezapfen (59), sich nach unten verjüngt und in einem Bereich mit parallelen Begrenzungen endet. in diesem Bereich ist die Öffnungsweite (92) um ein geringes größer als der Durchmesser des zylindrischen Teils des Zapfens (59), aber kleiner als dessen Abschlußplatte. Die Führungsgabel (40) ist um eine waagerechte Achse aus der Senkrechten um etwa 10° nach außen drehbar gelagert. dadurch wird einerseits beim Absenken der Last diese leicht erfaßt, andererseits nach dem Absenken durch die Abschlußplatten der Aufhängezapfen (59) die Führungsgabel (40) in senkrechte Position gestellt.

Die Führungsgabeln können mit waagerecht angebrachten Schieberiegeln ausgestattet sein, die in "Offen" und "ZU"-Stellung arretierbar sind und die den unteren Teil der Gabelöffnung nach oben abschließen. Zur Transportsicherung wird die Gabelöffnung verschlossen und so der Aufhängezapfen (59) und damit der Pallettentrger (31) und die Ladung auch nach oben arretiert.

In einer besonderen Ausführungsform sind die Führungsgabeln (40) um ihre waagerechte Achse aus ihrer Position etwa 10° außerhalb der Senkrechten um etwa 100° nach innen in die Waagerechte klappbar. Dabei ist ihre Drehachse in einem wannenförmigen Beschlag gelagert, der in die Ladefläche (2) eingelassen ist und eine Kontur besitzt, die der der Führungsgabel (40) entspricht und eine ihrer Dicke entsprechende Tiefe besitzt. Dadurch kann im Bedarfsfall die Führungsgabel (40) in die Ladefläche (2) bündig eingeklappt werden.

In einer anderen Ausführungsform können die Führungsgabeln auch unter die Ladefläche klappbar ausgeführt sein.

## Patentansprüche

1. Ladeeinrichtung, insbesondere für Lastkraftwagen, mit zwei vornehmlich hydraulisch betätigten, um eine Achse quer zur Fahrtrichtung drehbaren Schwenkarmen (3), die gemeinsam eine Last von der Tragfähigkeit des Lastkraftwagens oder darüber vom Boden aufnehmen und auf die eigene Ladefläche oder die Ladefläche eines anderen Transportfahrzeugs abzusetzen vermögen, die Entfernung der Schwenkarme (3) in Arbeitsstellung größer ist als die Ladeflächenbreite und diese Schwenkarme (3) von Schwenkzylindern (13) betätigt werden, die unterhalb der Ladefläche angebracht sind, dadurch gekennzeichnet, daß die Schwenkarme durch Drehung um eine außerhalb der Schwenkarme (3) z.B. in der Lenkerbefestigung (12) gelegene etwa senkrechte Achse zwischen Arbeitsstellung außerhalb der Ladefläche und Transportstellung innerhalb der Ladeflächenbreite bewegbar sind;
   daß der Drehpunkt der Schwenkarme (3), die Schwenkachse (7), durch nach unten ausfahrbare Stützstempempel (5) auf an diesen beweglich angebrachten Bodenplatten (6) gelegt ist;
   daß die Schwenkarme (3) mit einem teleskopierbaren und in den Endstellungen arretierbaren Querhaupt (8) und einem teleskopierbaren und in den Endstellungen arretierbaren Bodenplattenverbinder (9) verbunden sind;
   daß die Schwenkachsen (7) mit dem Fahrzeugrahmen (1) in geeigneter Weise beweglich verbunden sind (z.B. durch den Lenker (10)) und die Bodenplatten (6) mit den Schwenkarmen (3) zwischen Transportstellung hinter der Ladefläche und Arbeitsstellung seitlich der Ladefläche bewegbar sind;
   daß die Schwenkarme (3) von unterhalb der Ladefläche beweglich angelenkten Schwenkzylindern (11), die mit dem Fahrzeugrahmen (1) beweglich verbunden sind, über das Querhaupt (8) betätigt werden und über Stützstempel-Steuerventile (14) die Ausfahrlänge der Stützstempel (5) stets auf einen größtmöglichen Hebelarm für den Kraftangriff der Schwenkzylinder (11) auf die Schwenkarme (3) eingestellt wird.

2. Ladeeinrichtung nach Anspruch 1, dadurch gekennzeichnet, daß die Schwenkarme (3) über die Scharnierachsen (19) mit der Ladefläche (2) uni dem Fahrzeugrahmen (1) verbunden in etwa waagerechter Stellung in das Fahrzeugprofil einklappbar sind und in den Scharnierschenkeln (17) um die Achse der Schwenkwelle (7) drehbar gelagert sind;
   daß die Schwenkarme (3) an ihrem Fußende handelsübliche hydraulische Drehkolbenzylinder fest verbunden tragen, deren hohle Wellen mit einem Keilwellenprofil oder in anderer Weise kraftübertragungsfähig ausgebildet sind, in die die verschiebbaren Zapfen (16) mit entsprechendem Profil hineinragen;
   daß an den Schwenkarmen (3) in der Nähe der Schwenkachse (7) außen Anlenkzapfen (24) fest angebracht sind, die sich bei Schwenkarmstellung über der Ladefläche unterhalb der Längsachse des Schwenkarms (3) befinden und auf denen drehbare Traglaschen (23) angebracht sind und zwei Stützbeine (20), in ihrem unteren Teil mit einer Strebe (21) verbunden und mit beweglich angelenkten Bodenplatten (6) versehen, im Drehpunkt (22) mit der Traglasche (23) drehbar verbunden sind.

3. Ladeeinrichtung nah Anspruch 1 und 2, dadurch gekennzeichnet, daß die Schwenkarme (3) mit ihrer Hohlwelle mit Keilwellen- oder vergleichbarem Profil auf der Schwenkwelle mit der Schwenkachse (7) nach innen verschiebbar angebracht sind.

4. Ladeeinrichtung nach Anspruch 1,2 und 3, dadurch gekennzeichnet, daß die zum Heben der Last und Schwenken der Schwenkarme (3) erforderliche Kraft durch am Fahrzeugrahmen (1) angebrachte, auf die drehbare Schwenkwelle mit der Achse (7) wirkende hydraulische Schwenkantriebe oder durch über Kurbeltrieb wirkende herkömmliche Hydraulikzylinder erbracht wird und der Drehpunkt (13) der Stützbeine (10) auf der Längsachse der Schwenkarme (3) liegt oder die Schwenkarme (3) keine Stützvorrichtung besitzen.

5. Ladeeinrichtung nach Anspruch 1,2,3 und 4, dadurch gekennzeichnet, daß sie zur Zusammenfassung mehrerer Paletten zu einer Hieve mit einem Hebegeschirr (30) ausgestattet ist, das in der Regel aus Palettenträgern (31), Anschlaggliedern (32), lasttragenden Strängen (33)(Ketten, Seilen, Metallbändern, Kunststoffgurten o.ä.) und weiteren lasttragenden oder der Führung und Sicherung dienenden Elementen besteht.

6. Ladeeinrichtung mit Hebegeschirr nach Anspruch 5, dadurch gekennzeichnet, daß die Palettenträger (31) des Hebegeschirrs (30) stangenförmig mit rundem, ovalem,quadratischem, rechteckigem, dreieckigem oder anders geformtem Querschnitt aus einem Stück in unveränderbarer Länge oder aus mindestens 2 teleskopartig ineinander verschiebbaren und in verschiedener Länge arretierbaren Teilen (58,49) besteht, mit Endplatten (42) versehen sind, deren Abmessungen in einer Richtung zum Einführen in den Freiraum zwischen den Palettenfüßen kleiner sind als dieser Freiraum, in der anderen Richtung zum Halten der Paletten größer sein kann als dieser Freiraum und die mit etwa ovalen Öffnungen versehen sind zur Aufnahme von Anschlaggliedern (32) und daß Teile (44) der Endplatten (42) nach außen abgewinkelt und an der Kante angeschärft oder gerundet sein können.

7. Ladeeinrichtung mit Hebegeschirr nach Anspruch 5 u. 6, dadurch gekennzeichnet, daß die Palettenträger (31) an ihren Endplatten (42) Aufhängezapfen (59) mit einem zylindirschen Teil und mit Abschlußplatten (58) vornehmlich ovaler Kontur und von größerer Ausdehnung als dem zylindrischen Teil versehen sind, deren schmalere Abmessung in die Richtung der größten Ausdehnung der Endplatte (42) weist und die Aufhängezapfen (59) außermittig zur Palettenträgerachse in Richtung der größten Ausdehnung der Endplatte (42) fest oder einschiebbar und in den Endstellungen verriegelbar angebracht sind und die lasttragenden Stränge (33) mit Lastarmen (39) versehen sind, deren untere Öffnung (72) die gleiche Kontur besitzt wie die Abschlußplatte (58) des Aufhängezapfens (59) und die größte Öffnungsweite quer zur Längsachse des Lastarms (39) liegt und das Langloch (68) des Fußhakens (34) an einem Ende eine Offnungsweite hat, die größer ist als die Abschlußplatte (58) des Aufhängezapfens (59).

8. Ladeeinrichtung mit Hebegeschirr nach Anspruch 5,6 und 7, gekennzeichnet durch bandförmige Anschlagglieder (32), die an ihrem unteren Ende einen runden Zapfen (62) und auf diesem eine Abschlußplatte (63) tragen, deren eine Kante der Kontur der Öffnung (43) der Endplatte (42) des Palettenträgers (31 entspricht, der Durchmesser des Zapfens (62) dem kleineren Radius (e) der Offnung der Endplatte (43) und deren Maß (i) der grüßten Öffnungsweite in der Endplatte (42) entspricht, während das Maß (h) größer ist als (k), diesem Zapfen gegenüber kann ein ähnlicher Zapfen (67) angebracht sein, sein, und ein am oberen Ende angebrachter sicherbarer Bolzen (64) zur Befestigung eines lasttragenden Stranges (33) und dazwischen mit einem sicherbaren Fußhakenbolzen (65) mit einer schrägen Fläche (66), deren Winkelung mit der Schrägung der Kante (70) des Fußhakens korrespondiert.

9. Ladeeinrichtung mit Hebegeschirr nach Anspruch 5,6,7,8, gekennzeichnet durch lasttragende Stränge (33), die an ihrem oberen Ende mit handelsüblichen Verbindungsgliedern mit den Schwenkarmen (3) verbunden sind, sich nach unten verzweigen und in der Regel über Anschlagglieder (32) mit Palettenträgern (31) unterschiedlicher Palettenpaare (60) und (61) verbunden sind;

daß die jeweils zu einem äußeren Palettenträger (31) der Hieve führenden lasttragenden Stränge (33) am Fußhakenbolzen (65) ihres Verbindungsgliedes (32) Fußhaken (34) tragen, in deren langem Schenkel ein Langloch (68) mit nach oben weisenden zahnartigen Erweiterungen (69) eingearbeitet ist, und deren kürzerer Schenkel zur Umfassung des Palettenfußes zweimal rechtwinklig abgebogen ist und durch teleskopierbare, in verschiedenen Längen arretierbare Sicherungswinkel (35), die zur Ladungssicherung beim Transport mit Verbindungssträngen (36) und Spannschlössern (37) mit den Verzweigungspunkten der lasttragenden Stränge (33) verbunden sind.

10. Ladeeinrichtung nach Anspruch 1,2,3,4 mit einem Hebegeschirr nach Anspruch 5,6,7,8 und 9 zur Verwendung bei herkömmlichen Absetzkippern insbesondere beim Hafenumschlag im Zusammenwirken mit Hafenkränen, deren Lasthaken mit einer Quertraverse mit zwei nach unten gerichteten Lastaugen (77) versehen ist, deren Ab stand der lichten Weite zwischen den Schwenkarmen des Absetzkippers entspricht, dadurch gekennzeichnet, daß die beiden Hebegeschirrteile an ihren oberen Enden Doppelhaken (38) tragen, die unten Augen (75) tragen, in denen die lasttragenden Stränge (33) des Hebegeschirrs (30) handelsüblich befestigt sind, im darüber liegenden Teil befinden sich zwei übereinanderliegende, U-förmige, schräg nach oben gerichtete Ausnehmungen (76) mit seitlicher Öffnung, die obere Ausnehmung zur Aufnahme der Lastaugen der Quertraverse, die unteren zur Aufnahme des Tragbolzens (78) mit Endplatte der Schwenkarme (3).

11. Ladeeinrichtung nach Anspruch 1,2,3,4 mit einem Hebegeschirr nach Anspruch 5, dadurch gekennzeichnet, daß die Lkw-Bordwände in einer erfindungsgemäßen Gestaltung Bestandteil des Hebegeschirrs sind,
daß die Ladefläche (2) mit senkrechten, herausnehmbaren, oben allseitig zugespitzten Rungen (82) versehen ist,
daß das Bordwand-Oberteil (79) lasttragend ausgebildet ist und in seinen seitlichen senkrechten Endbegrenzungen (81) nach unten offene, dem Querschnitt der Rungen (82) entsprechende Taschen besitzt, ihre verstärkte Unterkante nach unten geöffnete Schlitze besitzt und sich in diesen Schlitzen beweglich Drahtseilschlingen (80) mit Vollkausche und durchgehendem Bolzen oben und mit Vollkausche und dem Zapfen (62) des Anschlaggliedes (32) entsprechenden Zapfen befinden,

daß das Bordwand-Unterteil (83) um eine waagerechte Achse drehbar mit dem Oberteil (79) verbanden ist, seine seitlichen senkrechten Endbegrenzungen (84) ein U-förmiges nach innen offenes Profil besitzen mit im oberen Teil parallelen und sich nach unten erweiterndem Schenkelabstand und
daß das Bordwand-Unterteil (83) über lösbare Scharniere (85) mit der Ladefläche (2) verbunden ist.

12. Ladeeinrichtung nach Anspruch 1 für Fahrzeuge ohne Ladeflächen-Bordwände, dadurch gekennzeichnet, daß an der Ladefläche (2) des Fahrzeugs nach oben offene, etwa senkrechte Führungsgabeln (40) angebracht sind, deren obere Öffnung erheblich größer ist als der Durchmesser des zylindrischen Teils des Aufhängezapfens (59) oder des Zapfens (67), sich nach unten verjüngt zu einem Öffnungsteil mit parallelen Begrenzungen und einer Öffnungsweite (92), die etwas größer ist als der zylindrische Teil des Zapfens (59) bezw. (67), aber kleiner als die Abschlußplatte (56) dieser Zapfen und dieser untere Teil der Führungsgabeln (40) durch waagerechte, arretierbare Riegel verschließbar ist, weiterhin die Führungsgabeln (40) um eine waagerechte Achse um etwa 10° nach außen drehbar gelagert sind und die ferner nach innen in waagerechte, in die Ladefläche eingelassene Beschläge eingeklappt werden können, wobei die Beschläge die Kontur der Führungsgabeln und ihre Tiefe der Dicke der Führungsgabeln entspricht, oder die Führungsgabeln nach außen unter die Ladefläche geklappt und in dieser Stellung arretiert werden können.

13. Ladeeinrichtung von gängigen Absetzkippern mit einer Hauptwelle (86), an der die Schwenkarme drehbar angebracht sind, mit einem Hebegeschirr nach Anspruch 5,
dadurch gekennzeichnet, daß an der Hauptwelle (86) im Querschnitt winkelförmige Ladeklappen (41) drehbar angebracht sind, die an ihrem der Fahrzeugmitte jeweils abgewandten Ende durch Endbleche verschlossen sind, mit Schieberiegeln (88) mit dem Fanghaken verbindbar und durch dessen Betätigung in waagerechte Position gebracht werden können und daß die Seitenwände der Ladeklappen (41) am Verbindungspunkt (91) durch handelsübliche Spannschlösser mit der festen Ladefläche (2) verbindbar sind.

## Claims

1. Loading device, in particular for commercial vehicles, with two primarily hydraulically operated swivel arms (3) which are rotatable around an axis at right-angles to the direction of travel and which together are capable of lifting a load equivalent to or greater than the load-bearing capacity of the commercial vehicle from the ground and depositing such a load in the loading area of the vehicle to which it is attached or of another transport vehicle, whereby the distance between the swivel arms (3) in operational position is greater than the width of the loading area and these swivel arms (3) are operated by rotating cylinders (13) which are installed below the loading surface, characterised in that the swivel arms can be moved between the operational position outside the loading area and the transportation position within the width of the loading area by means of rotation around an approximately vertical axis located outside of the swivel arms (3), e.g. in the guide rod attachment (12); that supporting plungers (5) which can be extended in a downward direction hold the centre of rotation of the swivel arms (3), the swivel axis (7), on base plates (6) which are attached in moveable manner to the said plungers; that the swivel arms (3) are connected to a telescopic crosshead (8) which can be fixed in its end positions and a telescopic base plate connector (9) which can be fixed in its end positions;

that the swivel axes (7) are connected to the frame (1) of the vehicle in a suitable, moveable manner (e.g. via the guide rod (10)), and that the base plates (6) can be moved with the swivel arms (3) between the transportation position behind the loading area and the operational position to the side of the loading area; that the swivel arms (3) are operated via the crosshead (8) by rotating cylinders (11) which are installed in movable, articulated configuration under the loading surface and connected in moveable configuration to the frame (1) of the vehicle, and that control valves (14) for the supporting plungers (5) set the extension length of the supporting plungers (5) at all times so as to provide the largest possible lever arm for the force applied by the rotating cylinders (11) to the swivel arms (3).

2. Loading device in accordance with Claim 1, characterised in that the swivel arms (3) are connected via the hinged axes to the loading area (2) and the vehicle frame (2) and can be folded into approximately horizontal position within the contours of the vehicle, and that the swivel arms (3) are pivoted in the hinged legs (17) so as to enable said arms to be rotated around the axis of the rotating shaft (7); that standard hydraulic rotary piston cylinders are fixed to the base ends of the swivel arms (3), the hollow shafts of which cylinders are configured in power-transmitting design via external splines or any other appropriate design feature and into which cylinders the appropriately contoured sliding tappets (16) protrude; that link pins (24) are fixed to the outside of the swivel arms (3) in the vicinity of the swivel axis (7), whereby the said link pins are located under the longitudinal axis of the swivel arm (3) when the swivel arm is positioned above the loading area and whereby rotatable bearing plates (23) are attached to said link pins, and that two supporting legs (20), which are joined by a strut (21) in their lower sections and provided with base plates (6) attached in articulated design, are connected to the bearing plate (23) in rotatable configuration at the pivot (22).

3. Loading device in accordance with Claims 1 and 2, characterised in that the swivel arms (3) are installed, together with their hollow shafts provided with external splines or a comparable profile, on the rotating shaft with the swivel axis (7) in such a manner as to enable said swivel arms to be slid inwards.

4. Loading device in accordance with Claims 1, 2 and 3, characterised in that the power required to lift the load and rotate the swivel arms (3) is supplied by hydraulic slewing drives attached to the vehicle frame (1) which act on the rotating shaft with the axis (7), or by conventional hydraulic cylinders operating via a crank mechanism, and that the pivot (13) of the supporting legs (10) is located on the longitudinal axis of the swivel arms (3), or the swivel arms (3) do not possess any supporting device.

5. Loading device in accordance with Claims 1, 2, 3 and 4, characterised in that said device is equipped with lifting tackle (30) for combining several pallets to form one hoisting unit, said tackle generally comprising pellet holders (31), attachment members (32), load-bearing lines (33) (chains, ropes, metal straps, plastic belts or similar) and additional load-bearing elements or guiding and securing elements.

6. Loading device with lifting tackle in accordance with Claim 5, characterised in that the pellet holders (31) of the tackle (30) take the form of bars with a round, oval, square, rectangular, triangular or other cross-section consisting of one piece of unalterable length or of at least 2 parts (58, 49) which can be slid one inside the other in the manner of a telescope and fixed at varying lengths, whereby the said bars are provided with end plates (42), the dimensions of which in one direction are smaller than the gap between the pellet bases, to enable insertion in the said gap, while in the other direction the dimensions of the said pellet bases can be larger than the said gap, for the purpose of holding the pellets, whereby the said end plates are furthermore provided with openings which may be oval, for example, for the insertion of attachment members (32), and that parts (44) of the end plates (42) may be angled outward and scarfed or rounded at the edges.

7. Loading device with lifting tackle in accordance with Claims 5 and 6, characterised in that the end plates (42) of the pallet holders (31) are provided with suspension studs (59) comprising a cylindrical part and end plates (58) which are primarily oval in shape and broader than the cylindrical part, the narrower dimension of which points in the direction of the largest dimension of the end plate (42), that the suspension studs (59) are attached in fixed or retractable configuration, eccentric to the axes of the pallet holder in the direction of the largest dimension of the end plate (42) and fixable in their end positions, that the load-bearing lines (33) are provided with load-bearing arms (39), the bottom opening (72) of which possesses the same contour as the end plate (58) of the suspension stud (59), that the broadest part of the opening is at right-angles to the longitudinal axis of the load-bearing arm (39), and that the slot (68) of the base hook possesses an opening dimension at one end which is broader than the end plate (58) of the suspension stud (59).

8. Loading device with tackle in accordance with Claims 5, 6 and 7, characterised by strip-type attachment members (32) at the bottom end of which is a round stud (62) bearing an end plate (63), one edge of which corresponds to the contour of the opening (43) of the end plate (42) of the pallet holder (31), whereby the diameter of the stud (62) corresponds to the smaller radius (e) of the opening of the end plate (43) and dimension (i) of the end plate (63) corresponds to the broadest opening in the end plate (42), while dimension (h) is greater than (k), whereby a similar stud (67) can be attached opposite this stud (62), and by a lockable bolt (64) attached at the top end for the attachment of a load-bearing line (33) and, between the two ends, a lockable base hook bolt (65) with a bevelled surface (66), the angle of which corresponds to the bevel of the edge (70) of the base hook.

9. Loading device with lifting tackle in accordance with Claims 5, 6, 7, 8, characterised by load-bearing lines (33), the top ends of which are connected to the swivel arms (3) via standard connecting members, whereby the said lines branch out in downward direction and are generally connected via attachment members (32) to the pallet holders (31) of different pairs of pallets (60) and (61);
in that each load-bearing line (33) leading to an outer pallet holder (31) of the hoisting unit is provided with a base hook (34) on the base hook bolt (65) of its attachment member (32), whereby the long side of said base hook incorporates a slot (68) with tooth-like, upward-pointing extensions (69) and the shorter side of said base hook is bent twice at right-angles, in order to enclose the base of the pallet, and is connected to the branch points of the load-bearing lines (33) via telescopic securing brackets (35) which serve to secure the load in transit in conjunction with connecting lines (36) and turnbuckles (37).

10. Loading device in accordance with Claims 1, 2, 3, 4 with lifting tackle in accordance with Claims 5, 6, 7, 8 and 9, for use on conventional multi-bucket system vehicles, particularly in dock handling operations with wharf cranes whose lifting hooks are provided with a crosshead incorporating two downward-facing lugs (77), the spacing of which corresponds to the internal width between the swivel arms of the multi-bucket system vehicle, characterised in that the upper ends of the two lifting tackle units are provided with double hooks (38) with lugs (75) at the bottom, in which the load-bearing lines (33) of the lifting tackle (3) are attached in conventional manner, while located in the part above these lugs are two U-shaped, upward-slanting recesses (76) with side openings, located one above the other, the upper recess being for attachment of the lugs of the crosshead, and the lower recess for attachment of the holding bolt (78) with end plate of the swivel arm (3).

11. Loading device in accordance with Claims 1, 2, 3, 4 with lifting tackle in accordance with Claim 5, characterised in that the sides of the commercial vehicle form part of the lifting tackle in an appropriate configuration of the invention,

that the loading area (2) is provided with vertical, removable stakes (82) which are sharpened on all sides at the top, whereby the top part (79) of the side is configured in load-bearing design and the vertical side ends (81) of the said top part incorporate pockets which are open at their bottom ends and which correspond to the cross-section of the stakes (82), whereby the reinforced lower edge of the side possesses slots whose bottom ends are open and moveable wire cable slings (80) are located in these slots, with a cable eye and continuous bolt at the top, and with a stud corresponding to the cable eye and the stud (62) of the attachment member (32), that the lower part (83) of the side is connected to the upper part (79) in rotatable configuration around a horizontal axis, whereby the vertical side ends (84) of said lower part possess a U-shaped, inward-opening profile, the sides of which are parallel in the upper part and are spaced progressively further apart towards the bottom of the profile,

and that the lower part (83) of the side is connected to the loading area (2) via releasable hinges (85).

12. Loading device in accordance with Claim 1 for vehicles incorporating loading areas without side parts, characterised in that approximately vertical guide forks (40) with open tops are attached to the loading area (2) of the vehicle, the open ends of which forks are substantially larger than the diameter of the cylindrical part of the suspension stud (59) or of stud (67), and which are tapered in downward direction into a opening part with parallel edges and an opening width (92) which is slightly larger than the cylindrical part of stud (59) or (67), but smaller than the end plates (56) of these studs, whereby the lower part of the guide fork (40) can be closed via horizontal, lockable bolts, and whereby the guide forks (40) are pivoted on a horizontal axis enabling them to be rotated in outward direction by approx. 10° and can be folded inwards, into fittings which are incorporated into the loading surface, the fittings corresponding to the contours of the guide forks and the depth of the fittings corresponding to the thickness of the guide forks, or whereby the guide forks can be folded outwards, under the loading area, and fixed in this position.

13. Loading device for standard multi-bucket system vehicles with a main shaft (86) to which the swivel arms are attached in rotatable configuration, with lifting tackle in accordance with Claim 5,
characterised in that loading flaps (41) with an angular cross-section are attached to the main shaft (86) in rotatable configuration, whereby the ends of said flaps which face away from the middle of the vehicle are closed by end plates, whereby the said flaps can be connected via sliding bolts (88) to the catch hook and can be brought into a horizontal position via activation of the said catch hook, and that the sides of the loading flaps (41) can be connected to the fixed loading area (2) at the connection point (91) via standard turnbuckles.

## Revendications

1. Installation de chargement, particulièrement conçue pour camions, avec deux bras pivotants (3) actionnés principalement par force hydraulique, tournant autour d'un axe monté en travers du sens de la marche, pouvant soulever ensemble du sol une charge égale ou supérieure au poids de charge du camion,pour la déposer sur la surface de chargement propre ou sur celle d'un autre véhicule de transport, l'éloignement des bras pivotants (3) en position de travail étant plus grande que la largeur de la surface de chargement et ces bras pivotants (3) étant actionnés par des cylindres pivotants, montés en-dessous de la surface de chargement, caractérisés en ce que les bras pivotants peuvent être mis en mouvement par rotation autour d'un axe à peu près vertical monté en dehors des bras pivotants (3), par ex. dans la fixation de la bielle (12) entre la position de travail hors de la surface de chargement et la position de transport dans la largeur de la surface de chargement ;
que le point d'appui des bras pivotants (3), l'axe pivotant (7), est posé sur des plaques de fond (6) amovibles montées à travers des tampons d'appui dépliables vers le bas ;
que les bras pivotants (3) sont reliés par une tête transversale (8) télescopable et verrouillable dans sa position finale et par une liaison des plaques de fond (9) télescopable et verrouillable dans sa position finale ;
que l'axe pivotant (7) est lié de façon adéquate et mobile au cadre du véhicule (1) (par ex. par la bielle (10)) et que les plaques de fond (6) avec les bras pivotants (3) sont amovibles entre la position de transport à l'arrière de la surface de chargement et la position de travail sur le côté de la surface de chargement ;
que les bras pivotants (3) sont actionnés par des cylindres de pivotement (11) à conduite mobile, montés en-dessous de la surface de chargement, reliés de façon amovible au cadre du véhicule (1), par l'intermédiaire de la tête transversale (8) et que la longueur de dépliement des tampons d'appui (5) soit toujours réglée à un bras de levier aussi grand que possible pour l'application de la force des cylindres pivotants (11) sur les bras pivotants (3) par l'intermédiaire de soupapes de commande des tampons d'appui (14).

2. Installation de chargement suivant la revendication 1, caractérisée en ce que les bras pivotants (3) reliés à la surface de chargement (2) et au cadre du véhicule (1) par les axes des charnières (19) peuvent être repliés en position à peu près verticale dans le profil du véhicule et sont logés de façon orientable dans les ailes des charnières (17) autour de l'axe de l'arbre pivotant (7) ;
que les bras pivotants (3) portent aux bouts des pieds des cylindres à piston rotatif fixes de type courant, dont les arbres creux sont équipés d'une cannelure ou d'un autre profilé apte à cette transmission de force, cannelures dans lesquelles les goujons décalables (16) peuvent s'engager avec leur profilé :
que les arbres pivotants (3) portent, à l'extérieur, des manetons (24) fixes à proximité de l'axe de pivotement (7), qui se trouvent en-dessous de l'axe longitudinal du bras pivotant (3) lorsque les bras pivotants se trouvent au-dessus de la surface de chargement et sur lesquels sont montés des barres de supports orientables (23) et deux pieds d'appui (20), reliés de façon orientable dans leur partie inférieure avec une jambe de force (21), équipée de plaques de fond articulées, au point tournant (22) a la barre de support (23).

3. Installation de chargement selon la revendication 1 et 2, caractérisée en ce que les bras pivotants (3) avec leur arbre creux cannelé ou portant un profilé analogue, sont montés a l'arbre de pivotement avec l'axe de pivotement (7) de façon a être décalable vers l'intérieur.

4. Installation de chargement selon la revendication 1, 2 et 3, caractérisée en ce que la force requise pour soulever la charge et pivoter les bras pivotants (3) est produite par des entrainements pivotants hydrauliques montés sur le cadre du véhicule (1), agissant sur l'arbre de pivotement orientable avec l'axe (7) ou par des cylindres hydrauliques usuels agissant par commande à bielle, et que le point tournant (13) des pieds d'appui (10) repose sur l'axe longitudinal des bras pivotants (3) ou que les bras pivotants (3) n'ont pas de dispositif d'appui.

5. Installation de chargement selon la revendication 1, 2, 3 et 4, caractérisée en ce qu'elle est équipée d'un cadre de levage (30) permettant de soulever d'un coup plusieurs palettes, cadre composé en principe d'un support de palettes (31), d'éléments de butée (32), de cordes de charge (33) (chaînes, cordes, bandes métalliques, courroies en matière plastique ou autre) et d'autres éléments servant à soutenir la charge, au guidage ou à la sécurité.

6. Installation de chargement avec cadre de levage selon la revendication 5, caractérisée en ce que les supports de palettes (31) du cadre de levage (30) sont composés de pièces en forme de barres à section ronde, ovale, carrée, rectangulaire, triangulaire ou autre, d'une pièce de longueur invariable ou composés d'au moins 2 pièces décalables entre-elles télescopiquement et verrouillables sur différentes longueurs (58, 49), sont équipés de plaques finales (42) dont les dimensions dans un sens sont inférieures aux espaces libres pour permettre leur introduction dans l'espace libre entre les pieds de palettes, et dans l'autre sens, sont supérieures à cet espace libre pour permettre le maintien des palettes, plaques finales équipées d'ouvertures a peu près ovales pour recevoir des éléments de butée (32) et portant des pièces (44) peuvent être pliées vers l'extérieur et au rebord affûté ou arrondi.

7. Installation de chargement avec cadre de levage selon la revendication 5 et 6, caractérisée en ce que les supports de palettes (31) sont équipés à leurs plaques finales (42) de goujons d'accrochage (59) avec une pièce cylindrique et des plaques d'obturation (58) de contours essentiellement ovales et dont l'étendue est plus grande que celle de la pièce cylindrique, dont la dimension plus mince est orientée vers la plus grande dimension de la plaque finale (42) et les goujons d'accrochage (59) sont montés fixement ou de façon a être encastrés et verrouillables dans leurs positions finales et 5 excentrique par rapport à l'axe du support de palettes vers la plus grande dimension de la plaque finale (42), et dont les cordes de charge (33) sont équipées de bras de charge (39), dont l'ouverture inférieure (72) a le même contour que la plaque d'obturation (58) du goujon d'accrochage (59) et dont l'ouverture la plus grande repose transversalement par rapport a l'axe longitudinal du bras de charge (39) et le trou longitudinal (68) du crochet de pied (34) a une ouverture plus grande a son extrémité, que la plaque d'obturation (58) du goujon d'accrochage (59).

8. Installation de chargement avec cadre de levage selon la revendication 5, 6 et 7, caractérisée par des éléments de butée en forme de bandes (32), portant à leur extrémité inférieure un goujon arrondi (62) et une plaque d'obturation sur celui-ci (63), dont un rebord correspond au contour de l'ouverture (43) de la plaque finale (42) du support de palettes (31), le diamètre du goujon (62) et sa cote (i) correspond à la plus grande largeur de l'ouverture de la plaque finale (42), alors que la cote (h) est plus grande que (k), en face de ce goujon on peut monter un goujon analogue (67), et un tourillon blocable monté au bout supérieur (64), permettant de fixer une corde de charge et ayant, entre les deux, un tourillon à crochet à pied (65) avec une surface oblique (66), dont l'angle correspond à l'inclinaison du rebord (70) du crochet à pied.

9. Installation de chargement avec cadre de levage selon la revendication 5, 6, 7 et 8, caractérisée par des cordes (33) de charge, reliées à leur extrémité supérieure aux bras pivotants (3) par des éléments de liaisons de type usuel, se divisant vers le bas et étant liées aux supports de palettes (31) avec des paires de palettes différentes, en principe par l'intermédiaire d'éléments de butée (32) ;
que les cordes de charge menant respectivement aux supports de palettes extérieurs (31) des charges, portent des crochets à pieds (34) aux tourillons de crochet à pied (65) de leur élément de liaison (32) respectif, dans la longue aile duquel est pratiqué une longue ouverture (68) portant des prolongations en forme de dents (69) orientées vers le haut, et dont l'aile courte est recourbée deux fois à angle droit pour envelopper le pied des palettes, et reliées par des équerres de sécurité (35) télescopables et blocables sur différentes longueurs, au moyen de cordes de liaison (36) et de verrous de serrage (37) aux points d'intersection des cordes de charge (33).

10. Installation de chargement selon la revendication 1, 2, 3, 4 avec un cadre de levage selon la revendication 5, 6, 7, 8 et 9 à employer sur des multibennes de type usuel, surtout pour le transbordement de concours avec des grues de port, dont le crochet de charge est équipé d'une traverse avec deux oeillets orientés vers le bas (77), dont l'écart correspond à la portée libre des bras pivotants de la multibenne,
caractérisée en ce que les deux parties du cadre de levage portent à leur bout supérieur des double-crochets (38), ayant en bas des oeillets (75), dans lesquels sont normalement fixés les cordes de charge (33) du cadre de levage (30), dans la partie supérieure il y a deux creux (76) en forme d'U,
disposés l'un au-dessus de l'autre, orientés en oblique vers le haut, avec une ouverture latérale, le creux supérieur étant prévu pour recevoir les oeillets de charge de la traverse, le creux inférieur, pour recevoir le tourillon de support (78) avec la plaque finale des bras pivotants (3).

11. Installation de chargement selon la revendication 1, 2, 3, 4 avec un cadre de levage selon la revendication 5,
caractérisée en ce que les rebords du camion font partir du cadre de levage en raison d'une constitution inventive, que la surface de chargement (2) est équipée d'une colonne contre-fiche (82) verticale, amovible et à tête pointue, que la partie supérieure des parois du camion (79) est conçue pour porter des charges et porte dans ses limitations finales (81) verticales des côtés des poches ouvertes dans le bas, qui correspondent à la section des colonnes contre-fiche (82), que ses bords inférieurs renforcés possèdent des fentes ouvertes vers le bas et que dans ces fentes il y a des boucles de câble métallique mobiles (80) avec une cosse marine pleine et un tourillon allant de bout-en-bout en haut et avec une cosse marine pleine et un goujon correspondant au goujon (62) de l'élément de butée (32), que la partie inférieure de la paroi latérale du camion (83) est reliée de façon mobile à la partie supérieure (79) autour d'un axe horizontal, que sa limitation finale verticale (4) sur le côté porte un profilé en forme d'U ouvert vers l'intérieur avec un écart parallèle des ailes qui s'écarte vers le bas et que la partie inférieure des parois du camion (83) est reliée à la surface de chargement (2) par des charnières déverrouillables (85).

12. Installation de chargement selon la revendication 1 pour des véhicules sans parois latérales de surfaces de chargement, caractérisée en ce que la surface de chargement (2) du véhicule porte des fourches de guidage (40) a peu près verticales, dont l'ouverture supérieure est beaucoup plus grande que le diamètre de la partie cylindrique du goujon d'accrochage (59) ou du goujon (67), se rétrécissant vers le bas en une pièce d'ouverture avec des limitations parallèles et une largeur d'ouverture (92) un peu plus grande que la partie cylindrique du goujon (59) ou (67), mais plus petite que la plaque d'obturation (56) de ce goujon et que cette partie inférieure des fourches de guidage (40) peut être fermée par par un verrou horizontal à cran d'arrêt, en outre que les fourches de guidage (40) sont logées autour d'un axe horizontal et orientable d'environ 10° vers l'extérieur, et qui peuvent être repliés vers l'intérieur dans des garnitures horizontales montées dans la surface de chargement, les garnitures correspondant aux contours des fourches de guidage et leur profondeur, à l'épaisseur des fourches de guidage, ou que les fourches de guidage peuvent être repliées à l'extérieur sous la surface de guidage et peuvent être verrouillées dans cette position.

13. Installation de chargement de multibennes usuelles avec un arbre principal (86) sur lequel sont montés les bras pivotants, avec un cadre de levage selon la revendication 5, caractérisée en ce que l'arbre principal (86) porte des hayons (41) tournants de section angulaire, fermés à leurs bord opposé au milieu du véhicule, pouvant être relié par des verrous (88) aux crochets d'attrapage et pouvant être mis en position horizontale en actionnant celui-ci, et que les parois latérales des hayons (41) peuvent être reliés à la surface de chargement fixe (2) au point de liaison (91) par des verroux de serrage de type usuel.

Fig 1

EP 0 220 560 B1

EP 0 220 560 B1

Fig. 3

Fig. 2

Fig. 2a

Fig 5

Fig 5a

3

15

19

3+15

3+15

19

Fig. 4

Fig. 4a

1  2

7  15  22

23
24

20

21
6

3

17  18  16

Fig 6

Fig 7

Fig 8

Fig. 9

Fig 10

Fig 11

Fig 12

Fig 13

31 31a

Fig 14

93
95
97
94
96
94

Fig 15

Fig 16

Fig 17

Fig 18

32

64

66

65

67 62 63

69

70

68

34

71

39

72,73

34

42

77

38

78

75

74

33

3

76

Fig 19

Fig 20

Fig 21

Fig 22